# EUROPÄISCHE PATENTSCHRIFT

(11) **EP 1 695 786 B1**
(45) Veröffentlichungstag und Bekanntmachung des Hinweises auf die Patenterteilung: **10.03.2010**
(21) Anmeldenummer: 05004188.8
(22) Anmeldetag: 25.02.2005
(51) Int. Cl.: B23K 26/06, B23K 26/067, B23K 26/30, B23K 26/10, B23K 37/02

(54) **Anordnung zur Laserbearbeitung, insbesondere zum Laserschweissen von 3D-Bauteilen, mit einem ersten optischen Element zur Aufteilung eines Laserstrahles und einem zweiten optischen Element zur Fokusierung der Teilstrahlen**
Device for laser machining, in particular laser welding of 3D workpieces, with a first optical element for dividing a laser beam and a second optical element for focusing the divided laser beams
Dispositif d'usinage laser, en particulier pour souder par laser des pièces 3D, avec un premier élément optique pour diviser le faisceau laser et un deuxième élément optique pour focaliser les faisceaux laser divisés

(43) Veröffentlichungstag der Anmeldung: 30.08.2006
(73) Patentinhaber: TRUMPF Werkzeugmaschinen GmbH + Co. KG, 71254 Ditzingen (DE)
(72) Erfinder: Wessner, Michael, 72513 Hettingen (DE)
(74) Vertreter: Kohler Schmid Möbus

(56) Entgegenhaltungen:
- DE-A1- 4 217 705
- DE-A1- 10 027 148
- DE-A1- 19 547 033
- US-A- 6 100 497
- US-A1- 2001 008 231
- US-A1- 2002 134 768
- US-A1- 2004 232 119
- US-B1- 6 608 278
- PATENT ABSTRACTS OF JAPAN Bd. 015, Nr. 404 (M-1168), 15. Oktober 1991 (1991-10-15) -& JP 03 165992 A (NIPPON DENKI LASER KIKI ENG KK), 17. Juli 1991 (1991-07-17)
- PATENT ABSTRACTS OF JAPAN Bd. 2000, Nr. 01, 31. Januar 2000 (2000-01-31) -& JP 11 277277 A (SUMITOMO HEAVY IND LTD), 12. Oktober 1999 (1999-10-12)

## Beschreibung

Die Erfindung betrifft eine Anordnung zur Laserbearbeitung, insbesondere zum Laserschweißen von 3D-Bauteilen gemäß dem Oberbegiff des Anspruchs 1.

Eine derartige Doppelfokus-Anordnung zur Laserbearbeitung ist beispielsweise durch die US-B1-6 608 278 bekannt geworden. Bei dieser bekannten Doppelfokus-Anordnung zum Laserschweißen wird die optische Anordnung, bestehend aus Energiequelle, Umlenkspiegel, Strahlteilerspiegel und Fokussierspiegel, relativ zum Werkstück in Schweißrichtung ausschließlich verschoben, kann also nicht gedreht werden.

Aus Fig. 19 der US 2001/008231 A1 ist eine Doppelfokus-Laserbearbeitunganordnung bekannt, bei der ein Laserstrahl über ein Prisma, also über eine transmissive Optik, in zwei Teilstrahlen aufgeteilt wird. Die zwei Teilstrahlen werden dann über eine Linse, also ebenfalls über eine transmissive Optik, in einem Doppelfokus fokussiert. Prisma und Linse sind ortsfest in einem gemeinsamen Rohrgehäuse untergebracht, welches um die C-Achse einer Laserbearbeitungsanlage drehbar an einem Laserbearbeitungskopf angeordnet ist. Da der Laserstrahl koaxial zur C-Achse des Rohrgehäuses einfällt, ändert sich die Doppelfokuslage bei Drehung des Rohrgehäuses um die C-Achse nicht.

Ferner ist aus der DE 100 27 148 A1 ein adaptiver Spiegel zum Fokussieren eines einzigen Laserstrahls bekannt, der mittels eines Scannerspiegels zweidimensional abgelenkt werden kann.

Schließlich ist aus der DE-A-42 17 705 eine Düse bekannt, die um die B-Achse drehbar angeordnet ist. Der Laserstrahl trifft koaxial zur B-Achse auf einen adaptiven Spiegel mit anpassbarer Spiegeloberfläche und wird dann über einen Umlenkspiegel auf den eigentlichen Fokussierspiegel gelenkt, der den Laserstrahl in einem Fokus auf dem Werkstück abbildet. Über den adaptiven Spiegel kann der Fokus in Achsrichtung in einen anderen Fokus verstellt werden.

Der Erfindung liegt die Aufgabe zugrunde, die eingangs genannte Doppelfokus-Anordnung zur Laserbearbeitung dahingehend weiterzubilden, dass mit dem Doppelfokus auch 3D-Bauteile geschweißt werden können, bei deren Bearbeitung die Lage des Doppelfokus im Raum geändert wird.

Eine Anordnung zur Laserbearbeitung gemäß der Erfindung ist in dem Anspruch 1 definiert.

Vorzugsweise ist der Strahlteilerspiegel durch einen Dachspiegel und der Fokussierspiegel durch einen Parabolspiegel ausgebildet.

Ein Ausführungsbeispiel der Erfindung ist in der Zeichnung schematisch dargestellt und wird nachfolgend mit Bezug zu den Figuren der Zeichnung näher erläutert. Es zeigt im Einzelnen:
- **Fig. 1**: den Aufbau einer Laserschweißanlage;
- **Fig. 2**: den Aufbau eines Laserbearbeitungskopfs gemäß der Erfindung;
- **Fig. 3**: einen Laserbearbeitungskopf mit Gehäuse.

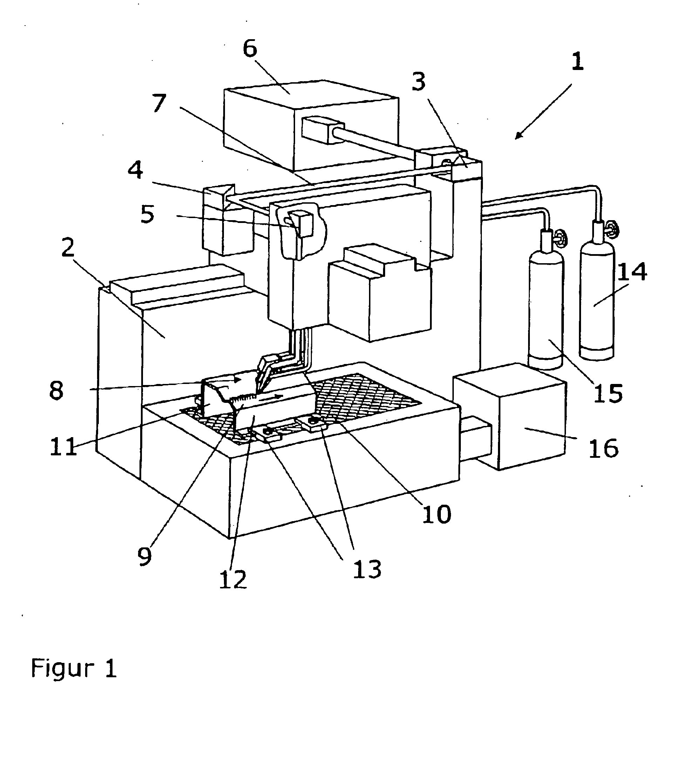

Aus der **Fig. 1** ist der Aufbau einer Laserschweißanlage **1** ersichtlich. Ein Maschinenrahmen **2** trägt die Bewegungseinheit der Maschine und das Strahlführungssystem mit Umlenkspiegeln 3 bis 5 für einen in dem Laser **6** erzeugten Laserstrahl **7.**

Ein Laserschweißkopf **8** mit einem Umlenkspiegel und einem Fokussierspiegel ist über zwei Drehachsen und in drei Richtungen bewegbar, um eine Schweißnaht **9** zum Fügen zweier auf einer Auflage **10** angeordneter Bauteile **11** und **12** optimal bearbeiten zu können. Die Bauteile 11 und 12 werden mithilfe einer Spannvorrichtung **13** fixiert. Zum Laserschweißen können dem Laserschweißkopf 8 Prozessgase (Arbeitgas **14,** Schutzgas **15)** zugeführt und über eine Absaugeinrichtung **16** abgesaugt werden.

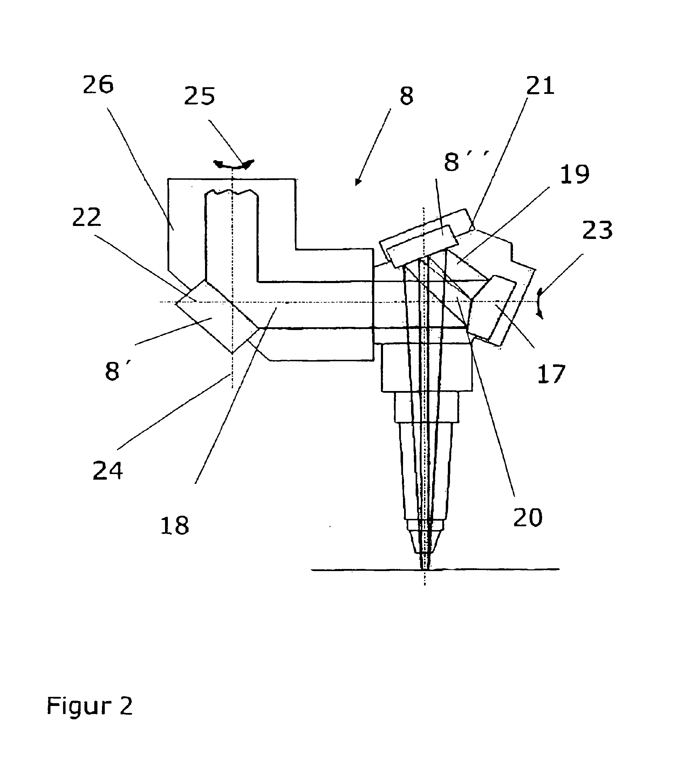

Gemäß **Fig. 2** wird ein Doppelfokus in dem Laserschweißkopf 8 mittels eines Dachspiegels **17** erzeugt. Der Dachspiegel 17 teilt den Rohstrahl **18** in zwei Teilstrahlen **19, 20** auf, die dann mit einem Fokussierspiegel 8'' (Parabolspiegel) als Doppelfokus abgebildet werden. Der Dachspiegel 17 und der Fokussierspiegel 8" sind gemäß der Erfindung ortsfest in einem gemeinsamen Gehäuse **21** untergebracht. D.h. zwischen diesen beiden Spiegeln 17, 8'' ist keine Relativbewegung möglich. Somit kann sich die Orientierung der beiden Fokusse während einer Drehung um eine Positionierachse **22** (B-Achse) gemäß dem Doppelpfeil **23** nicht verändern. 3D-Bauteile können somit auch mit Doppelfokus geschweißt werden. Um einen gewollten Orientierungswechsel zu erreichen, kann der Dachspiegel 17 um 90° verdreht werden. Die Halterungen der beiden Spiegel können nahezu identisch sein oder derart ausgebildet sein, dass ein Spiegelwechsel möglichst einfach durchgeführt werden kann. Durch Tausch der Spiegel kann die Brennweite beeinflusst werden. Weiterhin beinhaltet gemäß der Erfindung Spiegelanordnung den adaptiven Spiegel 8', der mittels Wasserdrucks seine Krümmung verändern kann. Somit kann die Fokuslage auch beim Schweißen mit Doppelfokus automatisch verändert werden, Der adaptive Spiegel 8' befindet sich in einem Gehäuse **26,** welches um eine weitere Positionierachse **24** (C-Achse) gemäß Doppelpfeil **25** der Laserbearbeitungsanlage drehbar angeordnet ist. Die Unterbringung des adaptiven Spiegels 8' in einem separaten Gehäuse getrennt von den beiden anderen Spiegel ermöglicht einen leicht durchführbaren Wechsel des adaptiven Spiegels 8'.

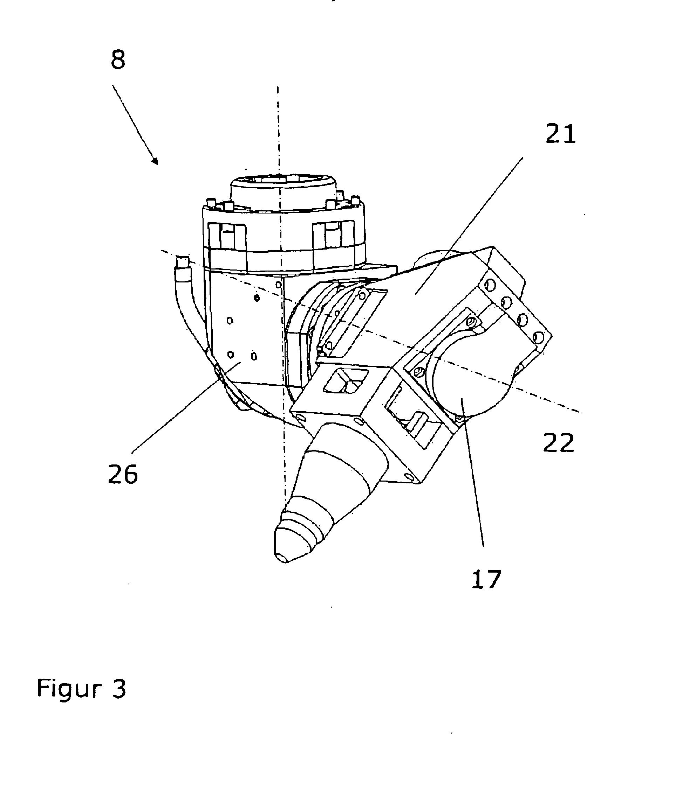

In **Fig. 3** ist gezeigt, wie der zusammengebaute Laserschweißkopf 8 um die Positionierachse 22 verschwenkt werden kann. Fig. 3 verdeutlicht auch, dass, gemäß der Erfindung der Laserschweißkopf 8 zwei drehbare Gehäuse 21, 26 umfasst. Daher können die Spiegel unabhängig voneinander ein- und ausgebaut werden. Insbesondere ist der Zugriff auf den adaptiven Spiegel leicht möglich.

### BEZUGSZEICHENLISTE

- **1**: Laserschweißanlage
- **2**: Maschinenrahmen
- **3**: Umlenkspiegel
- **4**: Umlenkspiegel
- **5**: Umlenkspiegel
- **6**: Laser
- **7**: Laserstrahl
- **8**: Laserschweißkopf
- **8'**: adaptiver Spiegel
- **9**: Schweißnaht
- **10**: Auflage
- **11**: Bauteil
- **12**: Bauteil
- **13**: Spannvorrichtung
- **14**: Arbeitsgas
- **15**: Schutzgas
- **16**: Absaugeinrichtung
- **17**: Dachspiegel
- **18**: Rohstrahl
- **19**: Teilstrahl
- **20**: Teilstrahl
- **21**: Gehäuse
- **22**: Positionierachse (B-Achse)
- **23**: Doppelpfeil
- **24**: Positionierachse (C-Achse)
- **25**: Doppelpfeil
- **26**: Gehäuse

## Patentansprüche

1. Anordnung zur Laserbearbeitung, insbesondere zum Laserschweißen von 3D-Bauteilen, mit einem Strahlteilerspiegel (17) zur Aufteilung eines Laserstrahls (18) in mindestens zwei Teilstrahlen (19, 20) und mit einem Fokussierspiegel (8") zur Fokussierung der Teilstrahlen (19, 20) in einem Doppelfokus,
**dadurch gekennzeichnet,**
**dass** der Strahlteilerspiegel (17) und der Fokussierspiegel (8") ortsfest in einem gemeinsamen, ersten Gehäuse (21) eines Laserbearbeitungskopfes (8) untergebracht sind, welches um die B-Achse (22) einer Laserbearbeitungsanlage drehbar an einem zweiten Gehäuse (26) des Laserbearbeitungskopfes (8) angeordnet ist,
**dass** das zweite Gehäuse (26) um die C-Achse (24) der Laserbearbeitungsanlage drehbar angeordnet ist und einen adaptiven Spiegel (8') mit anpassbarer Spiegeloberfläche zur Fokusverstellung aufweist, und dass der Laserstrahl im Laserbearbeitungskopf (8) zuerst koaxial zur C-Achse (24) auf den adaptiven Spiegel (8') auftrifft, dann koaxial zur B-Achse (22) auf den Strahlteilerspiegel (17) auftrifft und schließlich seine mindestens zwei Teilstrahlen (19, 20) auf den Fokussierspiegel (8") auftreffen.

2. Anordnung nach Anspruch 1, **dadurch gekennzeichnet, dass** der Strahlteilerspiegel (17) durch einen Dachspiegel ausgebildet ist.

3. Anordnung nach Anspruch 1 oder 2, **dadurch gekennzeichnet, dass** der Fokussierspiegel (8") durch einen Parabolspiegel ausgebildet ist.

## Claims

1. Laser processing arrangement, in particular, for laser welding 3-dimensional components, with a beam divider mirror (17) for dividing a laser beam (18) into at least two partial beams (19, 20), and with a focussing mirror (8") for focussing the partial beams (19, 20) in a double focus,
**characterized in that**
the beam divider mirror (17) and the focussing mirror (8") are stationarily accommodated in a common first housing (21) of a laser processing head (8), which first housing (21) is arranged on a second housing (26) of the laser processing head (8) in such a fashion that it can be rotated about the B-axis (22) of a laser processing system,
the second housing (26) is arranged such that it can be rotated about the C-axis (24) of the laser processing system and has an adaptive mirror (8') with adjustable mirror surface for adjusting the focus, and
the laser beam in the laser processing head (8) is initially incident on the adaptive mirror (8') coaxially with respect to the C-axis (24), is then incident on the beam divider mirror (17) coaxially with respect to the B-axis (22), and finally, the at least two partial beams (19, 20) of the laser beam are incident on the focussing mirror (8").

2. Arrangement according to claim 1, **characterized in that** the beam divider mirror (17) is formed by a roof mirror.

3. Arrangement according to claim 1 or 2, **characterized in that** the focussing mirror (8") is formed by a parabolic mirror.

## Revendications

1. Dispositif d'usinage par laser, en particulier de soudage par laser de composants 3D, avec un miroir diviseur de faisceau (17) pour diviser un faisceau laser (18) en au moins deux faisceaux partiels (19, 20) et avec un miroir focalisateur (8") pour focaliser les faisceaux partiels (19, 20) en un double foyer,
**caractérisé en ce**
**que** le miroir diviseur de faisceau (17) et le miroir focalisateur (8") sont installés à poste fixe dans un premier boîtier commun (21) d'une tête d'usinage par laser (8), lequel est monté tournant autour de l'axe B (22) d'une installation d'usinage par laser sur un deuxième boîtier (26) de la tête d'usinage par laser (8),
**que** le deuxième boîtier (26) est monté tournant autour de l'axe C (24) de l'installation d'usinage par laser et présente un miroir adaptatif (8') à surface réfléchissante adaptable pour le réglage du foyer ou de la mise au point, et
**que** le faisceau laser dans la tête d'usinage par laser (8) atteint d'abord le miroir adaptatif (8') coaxialement à l'axe C (24), atteint ensuite le miroir diviseur de faisceau (17) coaxialement à l'axe B (22) et finalement que ses au moins deux faisceaux partiels (19, 20) atteignent le miroir focalisateur (8").

2. Dispositif selon la revendication 1, **caractérisé en ce que** le miroir diviseur de faisceau (17) est formé par un miroir en toit.

3. Dispositif selon la revendication 1 ou 2, **caractérisé en ce que** le miroir focalisateur (8") est formé par un miroir parabolique.
